# EUROPÄISCHE PATENTANMELDUNG

(11) **EP 2 447 619 A1**
(43) Veröffentlichungstag der Anmeldung: **02.05.2012**
(21) Anmeldenummer: 10188790.9
(22) Anmeldetag: 26.10.2010
(51) Int. Cl.: F24J 2/07, F24J 2/10, F24J 2/16, F24J 2/38, F24J 2/40, F24J 2/54, G01S 3/786

(54) **Linear konzentrierender Solarkollektor und Verfahren zur Reflektornachführung in einem solchen**

(71) Anmelder: Novatec Solar GmbH, 76133 Karlsruhe (DE)
(72) Erfinder: Selig, Martin, 76137 Karlsruhe (DE); Mertins, Max, 79104 Freiburg (DE)
(74) Vertreter: Geitz Truckenmüller Lucht

(57) **Zusammenfassung**

Die Funktion eines linear konzentrierenden Solarkollektors beruht in einfachen Worten darauf, dass Reflektoren einfallendes Sonnenlicht auf ein von einem Wärme aufnehmenden Medium durchflossenen Receiverrohr reflektieren. Aufgrund der Erdrotation müssen die Reflektoren jedoch regelmäßig nachgestellt werden, um ein Eintreffen des Sonnenlichts auf dem Receiverrohr sicherzustellen. Bekannte Nachführungen verwenden hierzu errechnete Sonnenstände, was bei baulichen Abweichungen, etwa durch Dehnung und Materialbeanspruchung, zu Ungenauigkeiten und Effizienzeinbußen führt. Die Erfindung soll die Nachführung der Reflektoren in einem solchen linear konzentrierenden Solarkollektor verbessern. Dies gelingt dadurch, dass die Strahlungsintensität im Bereich beiderseits neben dem Receiverrohr gemessen wird und mittels einer Regelung bei ungleicher Ausstrahlung beidseits des Receiverrohrs die Reflektoren so weit nachgeführt werden, dass die Strahlungsintensität beidseits des Receivers gleich und damit das Maximum der Strahlungsintensität auf dem Receiverrohr liegt.

## Beschreibung

Die vorliegende Erfindung betrifft einen linear konzentrierenden Solarkollektor, umfassend ein erhöht gelagertes Receiverrohr zur Absorption von Wärmeenergie und eine Vielzahl von beiderseits des Receiverrohrs angeordneten, um ihre Längsachse schwenkbar gelagerten, Reflektoren zur Reflexion einfallenden Sonnenlichts auf das Receiverrohr, sowie ein Verfahren zur Reflektornachführung in einem solchen linear konzentrierenden Solarkollektor.

Eine derartige Vorrichtung und ein Verfahren zur Reflektornachführung wurden bereits in der europäischen Patentanmeldung EP 1 754 942 A1 beschrieben. Gegenstand dieser Anmeldung ist eine Fresnel-Solar-Kollektor-Anordnung, welche als solarthermisches Kraftwerk betrieben wird. Prinzipiell umfasst eine derartige Anordnung zunächst einen erhöht gelagerten Receiver, welcher in Form eines mit einer Receiverabdeckung übergriffenen Receiverrohrs ausgestaltet ist. In dem Receiverrohr ist ein wärmeleitfähiges Medium enthalten, welches auf das Receiverrohr eintreffende Wärmeenergie abführen kann, die im weiteren zur Verwendung aufbereitet, beispielsweise in elektrische Energie umgewandelt werden kann.

Die erforderliche Wärmeenergie stammt von der Sonneneinstrahlung, welche auf um das Receiverrohr herum angeordnete Reflektoren fällt und von diesen in Richtung des Receiverrohrs reflektiert und vorzugsweise hierbei fokussiert werden. Eine hohe Genauigkeit der Reflexion und Fokussierung ist hierbei sehr wichtig, so dass die einzelnen Reflektoren das reflektierte Licht auch tatsächlich auf das Receiverrohr zurückwerfen und möglichst wenige Verluste entstehen.

Im Laufe eines Sonnentages muss daher die Reflektoranordnung dem aktuellen Stand der Sonne nachgeführt werden, so dass sichergestellt ist, dass trotz des sich verändernden Sonnenstandes das reflektierte Licht weiterhin auf dem Receiverrohr auftrifft. Hierzu sind die Reflektoren in der Richtung ihrer Längserstreckung schwenkbar gelagert, so dass die Reflexion jeweils in einem geeigneten Winkel erfolgen kann, um das Receiverrohr zu treffen.

Üblicherweise ist die Anordnung von Receiver und Reflektoren derart gewählt, dass sowohl die einzelnen Reflektoren untereinander als auch der Receiver zueinander parallel aufgestellt sind. Die Reflektoren sind in parallelen Reihen auf beiden Seiten des Receivers angeordnet, wobei der oben genannte Stand der Technik eine Kopplung der einzelnen Reflektoren untereinander vorsieht, da zwar jeder einzelne Reflektor seine individuelle Position einnehmen muss, die Winkeländerung über der Zeit jedoch für alle Reflektoren gleich ist. Daher sind die Reflektoren über eine gemeinsame Schubstange miteinander verbunden, welche bei einer Verschiebung eine Winkeländerung über einen Hebelmechanismus bewirkt. Der Grad der Winkeländerung wird hierbei über eine Steuerung vorgenommen, welcher Sonnenpositionsalgorithmen zu Grunde gelegt werden. Die Berechnung des Sonnenstandes wird mit einer Messung über Neigungssensoren oder ähnlichen Einrichtungen an den Reflektoren abgeglichen, um so einen geschlossenen Regelkreis aufzubauen. Problematisch ist hierbei zunächst, dass diese Neigungssensoren, oder allgemein Winkelgeber, keine ausreichende Genauigkeit besitzen. Hierdurch kann möglicherweise die vorab erfolgte Berechnung mit der tatsächlich gemessenen Ist-Einstellung übereinstimmen, aber dennoch das Receiverrohr aufgrund der Ungenauigkeit verfehlt werden.

Derartige solarthermische Kraftwerke werden zudem üblicherweise in solchen Gegenden aufgestellt, in denen eine hohe Sonneneinstrahlung zu erwarten ist. Üblicherweise stellen derartige Gegenden an das Material relativ hohe Anforderungen, welches daher sowohl Dehnungen als auch Stauchungen ausgesetzt ist, welche jeweils zu Ungenauigkeiten bei der Nachführung führen können. Ebenfalls können Biegungen auftreten, sowohl durch Winddruck, als auch ebenfalls durch unterschiedliche Wärmeausdehnung, so dass alles in allem für eine optimale Nachführung durch das Folgen von berechneten Sonnenständen nicht bestmöglich gesorgt ist.

Vor diesem Hintergrund liegt der vorliegenden Erfindung die Aufgabe zu Grunde, die Nachführung der Reflektoren in einem linear konzentrierenden Solarkollektor zu verbessern, insbesondere auch die Ausbeute an gewonnener Wärmeenergie zu vergrößern.

Dies gelingt durch einen linear konzentrierenden Solarkollektor gemäß den Merkmalen des Hauptanspruchs. Zudem gelingt es durch die Anwendung eines Verfahrens gemäß dem nebengeordneten Anspruch 12. Weitere sinnvolle Ausgestaltungen des linear konzentrierenden Solarkollektors sowie des Verfahrens zur Reflektornachführung können den jeweiligen Unteransprüchen entnommen werden.

Ein erfindungsgemäßer linear konzentrierender Solarkollektor sieht hierzu vor, dass dem erhöht gelagerten Receiverrohr, welches zur Absorption von Wärmeenergie von einem wärmeleitenden Medium durchströmt wird, auf beiden Längsseiten jeweils wenigstens eine Sensoranordnung aufweist, welche mit Sensoren zur Erfassung von Strahlungsintensitäten bestückt sind. Die Sensoren sind hierbei so angeordnet, dass aus der Sicht eines Reflektors das Receiverrohr jeweils zwischen beiden Sensoren angeordnet ist. Insoweit können die wenigstens zwei Sensoranordnungen jeweils einen ersten Sensor aufweisen, welcher in Richtung von Reflektoren auf einer ersten Seite des Receiverrohrs ausgerichtet sind, während ergänzend oder alternativ auch zweite Sensoren vorhanden sein können, welche auf die Reflektoren auf einer zweiten Seite des Receiverrohrs ausgerichtet sind. Die Ausrichtung der ersten und/oder der zweiten Sensoren erfolgt also immer ausschließlich auf eine Gruppe von in Querrichtung miteinander gekoppelten Reflektoren.

Wesentlich ist hierbei lediglich, dass ein und derselbe Reflektor in einer Position ist, von der aus er je nach Einstellung Sonnenlicht auf Sensoren entweder beider Sensoranordnungen oder keiner Sensoranordnung lenken kann. Gleichzeitig darf er keinen zweiten Sensor mit dem von ihm reflektierten Licht erreichen. Es wird nunmehr geprüft, ob bei beiden gleichsinnig ausgerichteten Sensoren ein vorbestimmtes Verhältnis der Strahlungsintensität, beispielsweise die gleiche Strahlungsintensität, festgestellt werden kann. In diesem beispielhaften Fall müsste davon ausgegangen werden, dass im Schnitt beide Sensoren gleichstark mit Licht beaufschlagt werden, wobei ein Maximum der Strahlungsintensität dann in der Mitte zwischen den beiden Sensoren auftreten müsste. Liegt das Receiverrohr von den Reflektoren aus betrachtet nicht mittig zwischen den ersten und/oder zweiten Sensoren, so wird ein bestimmtes Verhältnis der jeweils gemessenen Strahlungsintensitäten angestrebt, das der gewünschten Lage des Maximums entspricht. An dieser Stelle befindet sich bei bestimmungsgemäßer Ausrichtung das Receiverrohr, so dass bei Vorliegen dieser Konfiguration eine optimale Ausbeute erzielt wird. In dem Fall jedoch, dass einer der beiden gleichsinnig ausgerichteten Sensoren weniger oder mehr empfangen würde, als das erwartete Verhältnis vorgibt, wird eine Nachführung dahingehend erforderlich, dass die Reflektoren solange verstellt werden, bis die Strahlungsintensität bei dem Sensor mit der zu hohen Strahlungsintensität soweit abgesunken und bei dem Sensor mit der zu niedrigen Strahlungsintensität soweit angestiegen ist, dass das Verhältnis der gemessenen Strahlungsintensität wieder erreicht wird.

Sofern lediglich erste Sensoren oder lediglich zweite Sensoren vorhanden sind, so werden für die Nachführung der Reflektoren lediglich die Detektoren einer Seite des Receiverrohrs in Betracht gezogen, so dass in diesem Fall die Nachführung der Reflektoren auch der anderen Seite vom Ergebnis dieser Messung abhängig gemacht werden muss. Es empfiehlt sich hierbei beispielsweise eine mechanische Kopplung von Reflektoren beider Seiten miteinander.

Sofern jedoch sowohl erste Sensoren als auch zweite Sensoren vorhanden sind, können die Reflektoren zu beiden Seiten des Receiverrohrs jeweils für sich, zumindest reihenweise, miteinander gekoppelt werden, also alle Reflektoren der einen Seite untereinander gekoppelt sein und alle Reflektoren der anderen Seite untereinander gekoppelt sein. Dies erhöht weiter die Genauigkeit der Nachführung.

Konkret kann bei der Montage der Sensoren im Bereich des Receiverrohrs wenigstens ein erster Sensor und wenigstens ein zweiter Sensor gemeinsam in einem Gehäuse angeordnet sein, wobei die beiden Sensoren aus dem Gehäuse in zwei entgegengesetzte Richtungen weisen. Die Sensoren können hierbei sowohl vor dem Gehäuse als auch in dem Gehäuse aufgenommen sein oder selbst die Gehäusewand durchbrechen. Die beiden Sensoren greifen also durch Öffnungen in einander gegenüberliegenden Flächen des Gehäuses, wobei vorzugsweise diese einander gegenüberliegenden Flächen einen spitzen Winkel einschließen. Dies ist der Position der Reflektoren in Bezug auf die Sensoren geschuldet, und ermöglicht einen breiten Aufnahmewinkel für die von den Reflektoren in Richtung des Receiverrohrs reflektierten Lichtstrahlen. Durch die einander gegenüberliegenden Anordnungen der Sensoren in der Sensoranordnung wird zudem gewährleistet, dass jeweils lediglich das von den Reflektoren einerseits des Receiverrohrs oder von den Reflektoren zur andererseits des Receiverrohrs reflektierte Licht empfangen werden kann, so dass keine Streuung zu Ungenauigkeiten bei der Messung führt. Die Sensoren sind hierzu im wesentlichen quer zum Receiverrohr ausgerichtet.

Ergänzend können um die Rezeptoröffnungen der Sensoren Schirme zum Abweisen von Streustrahlung angeordnet sein, welche beispielsweise direkt von der Sonne auf den Sensoren eintreffen kann. Hierdurch wird nochmals die Messgenauigkeit in Bezug auf die lediglich von den Reflektoren empfangene Strahlung verbessert.

Das Receiverrohr wird üblicherweise von einer Receiverabdeckung übergriffen, welche zum einen eine Wärmeisolierung des Receiverrohrs gewährleistet und zum anderen im Bereich oberhalb des Receiverrohrs einen Sekundärspiegel aufweist, welcher an dem Receiverrohr vorbei gestreute Strahlung nochmals auf das Receiverrohr zurückwirft. Im Bereich dieser Receiverabdeckung ist eine Unterkante vorhanden, an welcher auch die Sensoranordnungen beiderseits des Receiverrohrs befestigt werden können. Es handelt sich hierbei um eine günstige Stelle, nachdem aufgrund der Receiverabdeckung eine höhere Einstrahlung als oberhalb der Unterkante der Abdeckung ohnehin nicht möglich ist. Die Anordnung einer Sensoranordnung pro Seite des Receivers ist für die Messung an sich ausreichend, jedoch können zusätzliche Sensoranordnungen, welche paarweise an der Receiverabdeckung angeordnet sind, durch Ausmittlung des Ergebnisses die Messung gegebenenfalls verbessern.

Die Nachführung der Reflektoren erfolgt vorzugsweise mechanisch dadurch, dass eine Schubstange mehrere der Reflektoren derart verbindet, dass durch eine Verschiebung der Schubstange quer zum Receiverrohr der Einstellwinkel der Reflektoren angepasst wird. Hierbei erfolgt die Anpassung für alle Reflektoren in gleichem Maße, wobei durch unterschiedliche absolute Schräglage dennoch für jeden einzelnen Reflektor eine exakte, individuelle Nachführung vorgenommen wird. Die Verschiebung der Schubstange erfolgt gegenüber einem Festlager und mithilfe eines Stellmotors, und bewirkt im Falle des Vorhandenseins lediglich erster oder lediglich zweiter Sensoren eine Nachführung von Detektoren beider Seiten, und bei Vorhandensein erster und zweiter Sensoren eine Nachführung von Reflektoren jeweils nur einer Seite, wobei die Reflektoren der jeweils anderen Seite durch eigene Schubstangen gekoppelt sind.

Konkret können hierzu die Reflektoren jeweils wenigstens einen Schwenkhebel aufweisen, deren festes Ende drehfest mit dem Reflektor verbunden ist und deren freies Ende mit der Schubstange gekoppelt werden kann.

Das Festlager, gegenüber dem die Schubstange verschoben wird, kann ein tragender Receivermast sein, oder mit diesem verbunden sein. Zwischen dem Festlager und der Schubstange ist ein Stellelement aufgespannt, welches beispielsweise mithilfe des Stellmotors teleskopierbar ist und dadurch eine Verschiebung der Schubstange bewirken kann. Allerdings sind auch andere Möglichkeiten der Verwendung von Stellelementen gegeben, so beispielsweise ein Linearmotor oder dergleichen mehr.

Zur Verifizierung der groben korrekten Ausrichtung der Reflektoren weisen diese zusätzlich Neigungssensoren auf, so dass der Neigungswinkel der Reflektoren hierdurch nochmals ermittelt und mit entsprechenden Vorgaben verglichen werden kann. Eine grobe Vorausrichtung entsprechend dem eingangs beschriebenen Stand der Technik kann ergänzend durchgeführt werden.

Bei den Sensoren handelt es sich mit Vorteil um Photovoltaik-Zellen, welche die einfallende Strahlung direkt in elektrischen Strom umwandeln. Derartige Sensoren geben ein Stromsignal von ca. 0 bis 30 mA, welches in einen AD-Wandler eingespeist und von diesem umgesetzt und über einen Bus, beispielsweise einen Feldbus, zu einer Datenverarbeitungsanlage weitergeleitet werden. Es können jedoch auch andere Sensoren verwendet werden, wie beispielsweise Temperatursensoren, welche die Wärmeentwicklung messen. Ebenfalls denkbar ist die Verwendung einer Lichtleiteranordnung, welche das empfangene Licht an einen geeigneten Detektor weiterleiten.

Die vorstehend beschriebene Erfindung wird im Folgenden anhand eines Ausführungsbeispiels näher erläutert.

Es zeigen
- Figur 1: ein linear konzentrierender Solarkollektor in einer perspektivischen Darstellung von schräg oben,
- Figur 2: der Solarkollektor gemäß Figur 1 in einer seitlichen Draufsicht,
- Figur 3: den Receiver des Kollektors gemäß Figur 1 in einer Querschnittsdarstellung, sowie
- Figur 4: den Receiver gemäß Figur 3 mit einer Variante der Sensoranordnungen in einer Querschnittsdarstellung.

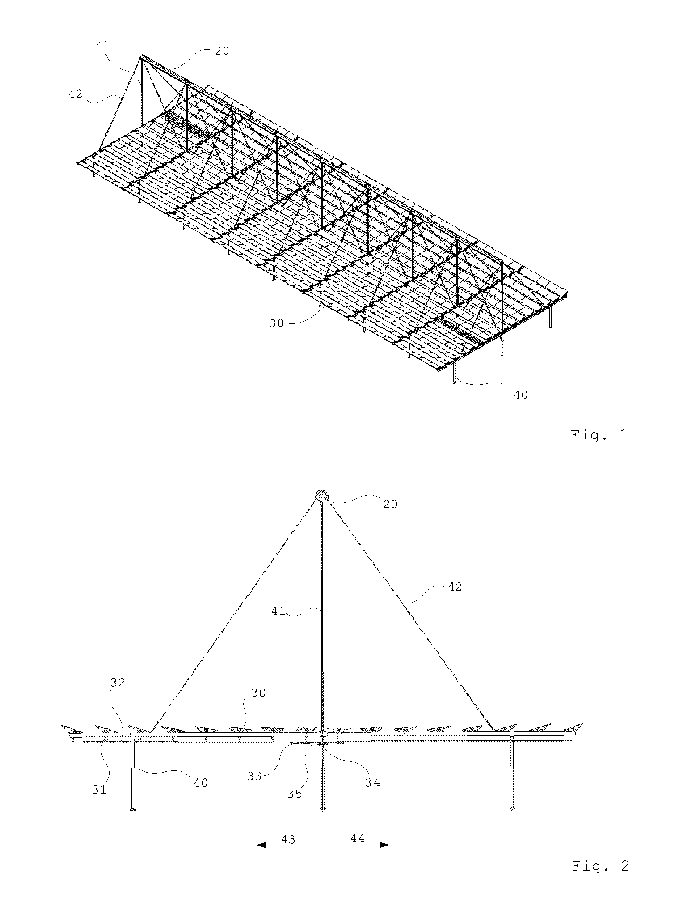

Figur 1 zeigt einen konzentrierenden Kollektor eines solarthermischen Kraftwerks, welcher im wesentlichen aus einem erhöht gelagerten Receiver 20 sowie auf diesen ausgerichteten Reflektoren 30 besteht. Die Reflektoren 30 sind auf einem Trägergerüst 40 aufgelagert und auf diesem derart schwenkbar, dass jeder Reflektor 30 das auf ihn fallende Sonnenlicht direkt auf den erhöht gelagerten Receiver 20 lenken kann. Der Receiver 20 ist hierbei auf Receivermasten 41 aufgestützt, welche mithilfe von Spannseilen 42 gegen das Trägergerüst 40 verspannt werden.

Figur 2 zeigt den oben beschriebenen Kollektor in einer seitlichen Darstellung, aus welcher die Verschwenkbarkeit der Reflektoren 30 hervorgeht. Die Reflektoren 30 verfügen auf ihrer nach unten gerichteten Seite jeweils über einen Schwenkhebel 31, über den sie gelenkig mit dem Trägergerüst 40 verbunden sind. Das freie Ende des Schwenkhebels 31 ist auf der Unterseite des Trägergerüstes 40 mit einer Schubstange 32 verbunden, welche somit sämtliche auf einer Seite 43, 44 des Receivers 20 befindlichen Reflektoren 30 mechanisch koppelt. Es werden also bei einer Nachführung der Reflektoren 30 mithilfe einer Verschiebung der Schubstange 32 sämtliche Reflektoren 30 um das gleiche Maß gedreht, wobei durch deren unterschiedliche Absolutpositionen jeweils dafür gesorgt ist, dass jeder einzelne Reflektor 30 aus seiner individuellen Position heraus das einfallende Sonnenlicht direkt auf den Receiver 20 leiten kann.

Die Verschiebung der Schubstange 32 erfolgt mithilfe eines Stellmotors 35, welcher ein teleskopierbares Stellelement 33 bedient. Dieses ist einerseits mit der Schubstange 32 und andererseits mit einem Festlager 34 verbunden, wobei sich das Festlager 34 an einem Receivermast 41 befindet. Die dargestellte Anordnung wiederholt sich mehrfach in Längsrichtung des Kollektors des solarthermischen Kraftwerks, wie in Figur 1 gezeigt.

Aufgrund der mechanischen Kopplung werden jeweils die Reflektoren 30 der ersten Seite 43 des Receivers 20 miteinander gekoppelt und ebenso die Reflektoren 30 auf der zweiten Seite 44 des Receivers miteinander gekoppelt.

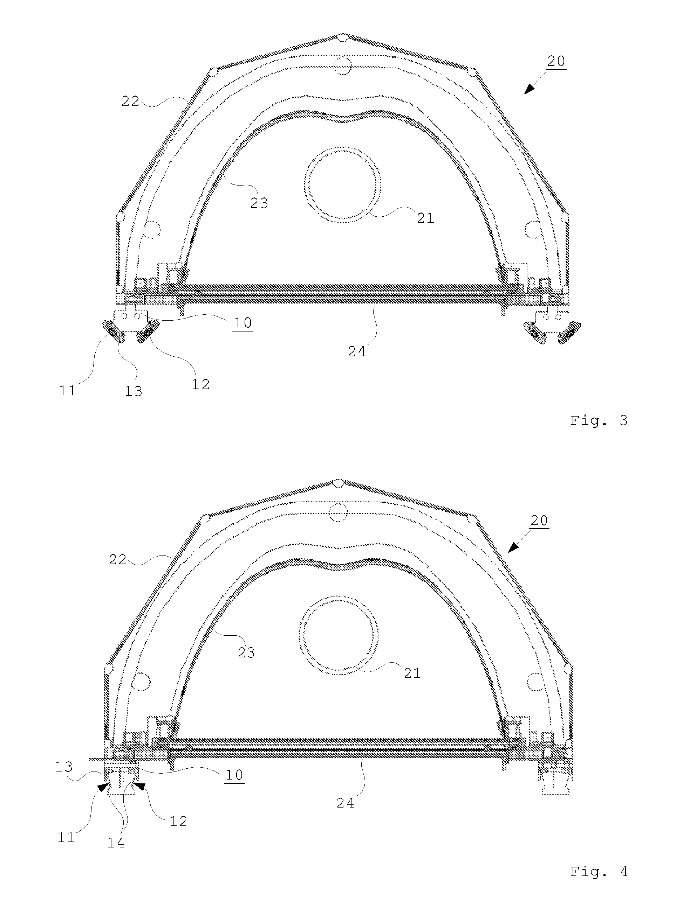

Figur 3 zeigt den Receiver 20 in einer Querschnittsdarstellung, wobei der Receiver 20 im wesentlichen aus einem Receiverrohr 21 besteht, in welchem das zu erwärmende Medium geführt wird, sowie aus einer Receiverabdeckung 22, welche das Receiverrohr 21 übergreift. Nach unten hin ist die Receiverabdeckung 22 durch eine Glasscheibe 24 abgedichtet, so dass zum einen weniger Wärmeverluste um das Receiverrohr 21 herum entstehen und zum anderen eine Verschmutzung des Receiverrohrs 21 und des auf der Innenseite der Receiverabdeckung 22 angeordneten Sekundärreflektors 23 ebenfalls vermieden ist. Der fragliche Sekundärreflektor reflektiert das am Receiverrohr 21 vorbei geleitete Sonnenlicht nochmals auf das Receiverrohr 21 und erhöht damit nochmals die Effektivität desselben. Die zwischen dem Sekundärreflektor 23 und der äußeren Hülle der Receiverabdeckung 22 vorgesehenen Schichten nehmen sowohl soweit benötigt Schaltelemente auf, als auch Dämmmaterial, um die Wärmeentwicklung um das Receiverohr 21 herum zu verbessern.

An den Unterkanten der Receiverabdeckung 22 sind auf beiden Seiten Sensoranordnungen 10 angeordnet, wobei jede dieser Sensoranordnungen 10 jeweils einen ersten Sensor 11 und einen zweiten Sensor 12 aufweist. Der erste Sensor 11 beider Sensoranordnungen weist hierbei in Richtung der Reflektoren 30 der ersten Seite 43 des linear konzentrierenden Solarkollektors und ist mithilfe eines Schirmes 13 sowohl gegen direkte Sonneneinstrahlung, als auch gegen das Einfallen von reflektiertem Licht der Reflektoren 30 der zweiten Seite 44 geschützt. Das von den ersten Sensoren 11 empfangene Licht wird auf seine Strahlungsintensität hin geprüft und eine Differenz zwischen den Strahlungsintensitäten der beiden ersten Sensoren 11 gebildet. Sofern die Differenz zwischen beiden ersten Sensoren 11 gleich Null ist, wird davon ausgegangen, dass ein Maximum der Strahlungsintensität genau zwischen beiden Sensoren liegt, also direkt auf dem Receiverrohr 21. In diesem Fall sind die Reflektoren des linear konzentrierenden Solarkollektors exakt nachgeführt und es ist kein Eingriff erforderlich.

Sofern jedoch die Differenz zwischen den Strahlungsintensitäten der beiden ersten Sensoren 11 ungleich Null ist, so wird eine Nachführung der Reflektoren 30 auf der ersten Seite 43 des Receivers 20 durchgeführt, dahingehend, dass die Strahlungsintensität bei dem ersten Sensor 11 mit der größeren Strahlungsintensität verringert und bei dem ersten Sensor 11 mit der kleineren Strahlungsintensität vergrößert wird. Die Nachführung wird solange durchgeführt, bis die Werte wieder ausgeglichen sind und die Differenz wieder gegen Null geht. Die Nachführung erfolgt hierbei über den Stellmotor 35, welcher über eine Verschiebung der Schubstange 32 eine Winkeländerung an den Reflektoren 30 bewirkt. Realisiert wird dies über einen herkömmlichen Proportionalregler, welcher die Differenz der Strahlungsintensitäten der ersten Sensoren 11 als Eingangssignal und das Stellsignal an den Stellmotor 35 als Ausgangssignal besitzt.

Eine entsprechende Nachführung wird durch die von den zweiten Sensoren 12 durchgeführten Messungen bewirkt. Diese wirken sich in der hier dargestellten Konfiguration wiederum nur auf die Reflektoren 30 der zweiten Seite 44 aus.

Figur 4 zeigt eine alternative Ausgestaltung der Sensoranordnungen 10, wobei diese in ein Gehäuse voll integriert sind, welches auf den gegeneinander abgewinkelten Flächen 14 Öffnungen für die Sensoren 11, 12 aufweist. Auch hier ist ein Schirm 13 vorgesehen, welcher eine direkte Sonneneinstrahlung auf die Sensoren verhindern soll.

Vorstehend beschrieben ist somit ein linear konzentrierender Solarkollektor mit einer verbesserten Nachführung der Reflektoren, welche durch die geeignete Anbringung von Sensoren im Bereich des Receiverrohrs eine Ausrichtung des Strahlungsmaximums direkt auf das Receiverrohr bewirkt und im Fall einer Abweichung eine exakte Nachführung begünstigt.

### BEZUGSZEICHENLISTE

- 10: Sensoranordnung
- 11: erster Sensor
- 12: zweiter Sensor
- 13: Schirm
- 14: Fläche
- 20: Receiver
- 21: Receiverrohr
- 22: Receiverabdeckung
- 23: Sekundärreflektor
- 24: Glasscheibe
- 30: Reflektor
- 31: Schwenkhebel
- 32: Schubstange
- 33: Stellelement
- 34: Festlager
- 35: Stellmotor
- 40: Trägergerüst
- 41: Receivermast
- 42: Spannseil
- 43: erste Seite
- 44: zweite Seite

## Patentansprüche

1. Linear konzentrierender Solarkollektor, umfassend ein erhöht gelagertes Receiverrohr (21) zur Absorption von Wärmeenergie und eine Vielzahl von beiderseits des Receiverrohrs (21) angeordneten, um ihre Längsachse schwenkbar gelagerten, Reflektoren (30) zur Reflexion einfallenden Sonnenlichts auf das Receiverrohr (21), **dadurch gekennzeichnet, dass** dem Receiverrohr (21) beidseits jeweils wenigstens eine Sensoranordnung (10) zur Erfassung von Strahlungsintensitäten zugeordnet ist, wobei erste Sensoren (11) jeder Sensoranordnung (10) gleichsinnig auf Reflektoren (30) auf einer ersten Seite (43) des Receiverrohrs (21) und/oder zweite Sensoren (12) jeder Sensoranordnung (10) gleichsinnig auf Reflektoren (30) auf einer zweiten Seite (44) des Receiverrohrs (21) ausgerichtet sind.

2. Linear konzentrierender Solarkollektor gemäß Anspruch 1, **dadurch gekennzeichnet, dass** wenigstens ein erster Sensor (11) und ein zweiter Sensor (12) gemeinsam in einem Gehäuse angeordnet sind, wobei die beiden Sensoren (11,12) durch Öffnungen in einander gegenüberliegenden Flächen (14) des Gehäuses hindurch fallendes Licht empfangen oder durch diese Öffnungen hindurch nach außen ragen.

3. Linear konzentrierender Solarkollektor gemäß Anspruch 2, **dadurch gekennzeichnet, dass** die einander gegenüberliegenden Flächen (14) miteinander einen spitzen Winkel einschließen.

4. Linear konzentrierender Solarkollektor gemäß einem der Ansprüche 2 oder 3, **dadurch gekennzeichnet, dass** um die Öffnungen herum jeweils wenigstens ein Licht abweisender Schirm (13) zum Abweisen von Streustrahlung angeordnet ist.

5. Linear konzentrierender Solarkollektor gemäß einem der vorhergehenden Ansprüche, **dadurch gekennzeichnet, dass** das Receiverrohr (21) von einer Receiverabdeckung (22) übergriffen ist, an deren Längskanten beiderseits jeweils wenigstens eine Sensoranordnung (10) angeordnet ist.

6. Linear konzentrierender Solarkollektor gemäß einem der vorhergehenden Ansprüche, **dadurch gekennzeichnet, dass** beidseits des Receiverrohrs (21) mehrere parallel zu diesem auf einem Trägergerüst (40) gelagerte Reflektoren (30) mittels wenigstens einer Schubstange (32) gekoppelt sind, welche mithilfe eines Stellmotors (35) gegenüber einem Festlager (34) verschiebbar ist.

7. Linear konzentrierender Solarkollektor gemäß Anspruch 6, **dadurch gekennzeichnet, dass** die schwenkbar gelagerten Reflektoren (30) jeweils wenigstens einen Schwenkhebel (31) aufweisen und die freien Enden dieser Schwenkhebel (31) mit der wenigstens einen Schubstange (32) verbunden sind.

8. Linear konzentrierender Solarkollektor gemäß einem der Ansprüche 7 oder 8, **dadurch gekennzeichnet, dass** das Festlager (34) mit einem das Receiverrohr (21) tragenden Receivermast (41) verbunden oder identisch ist und der Stellmotor (35) ein zwischen der Schubstange (32) und dem Festlager (34) aufgespanntes, vorzugsweise teleskopierbares, Stellelement (33) bedient.

9. Linear konzentrierender Solarkollektor gemäß einem der Ansprüche 7 bis 9, **dadurch gekennzeichnet, dass** eine Schubstange (32) jeweils nur Reflektoren (30) auf einer Seite des Receiverrohrs (21), oder Reflektoren (30) auf beiden Seiten des Receiverrohrs (21) bewegt.

10. Linear konzentrierender Solarkollektor gemäß einem der vorhergehenden Ansprüche, **dadurch gekennzeichnet, dass** den Reflektoren (30) Neigungssensoren zur Erfassung des Neigungswinkels der Reflektoren (30) zugeordnet sind.

11. Linear konzentrierender Solarkollektor gemäß einem der vorhergehenden Ansprüche, **dadurch gekennzeichnet, dass** es sich bei den Sensoren (11,12) um Photovoltaik-Zellen, Temperatursensoren oder Photodetektoren handelt.

12. Verfahren zur Reflektornachführung in einem linear konzentrierenden Solarkollektor, bei welchem ein erhöht gelagertes Receiverrohr (21) zur Absorption von Wärmeenergie und eine Vielzahl von beiderseits des Receiverrohrs (21) angeordneten, um ihre Längsachse schwenkbar gelagerten Reflektoren (30) zur Reflexion einfallenden Sonnenlichts auf das Receiverrohr (21) vorgesehen sind, **dadurch gekennzeichnet, dass** mithilfe wenigstens zweier beidseits des Receiverrohrs (21) angeordneter Sensoranordnungen (10) eine Erfassung von Strahlungsintensitäten erfolgt, wobei erste Sensoren (11) jeder Sensoranordnung (10) gleichsinnig auf die Reflektoren (30) auf einer ersten Seite (43) des Receiverrohrs (21) und/oder zweite Sensoren (12) jeder Sensoranordnung (10) gleichsinnig auf die Reflektoren (30) auf einer zweiten Seite (44) des Receiverrohrs (21) ausgerichtet sind, und die Reflektoren (30) im Falle einer Differenz zu einem vorbestimmten Verhältnis zwischen den Strahlungsintensitäten der ersten Sensoren (11) und/oder zwischen den Strahlungsintensitäten der zweiten Sensoren (12) gemeinsam oder separat selbsttätig derart verschwenkt werden, dass sich das Verhältnis der beiderseits des Receiverrohrs (21) erfassten Strahlungsintensitäten der ersten Sensoren (11) und/oder der zweiten Sensoren (12) dem vorbestimmten Verhältnis annähert.

13. Verfahren gemäß Anspruch 12, **dadurch gekennzeichnet, dass** die Verschwenkung der Reflektoren (30) aufgrund des Ausgangssignals eines Reglers erfolgt, dessen Eingangssignal die Differenz zwischen den gemessenen Strahlungsintensitäten der ersten Sensoren (11) oder zwischen den gemessenen Strahlungsintensitäten der zweiten Sensoren (12) ist und der diese Differenz zu dem vorbestimmten Verhältnis auf Null regelt.
